# EUROPÄISCHE PATENTANMELDUNG

(11) **EP 2 119 900 A2**
(43) Veröffentlichungstag der Anmeldung: **18.11.2009**
(21) Anmeldenummer: 09158579.4
(22) Anmeldetag: 23.04.2009
(51) Int. Cl.: F02K 3/075

(54) **Gasturbinentriebwerk mit einer Vorrichtung zur Ableitung von Turbinenluft in den Fanströmungskanal**

(30) Priorität: 16.05.2008 DE 102008024022
(71) Anmelder: Rolls-Royce Deutschland Ltd & Co KG, 15827 Blankenfelde-Mahlow (DE)
(72) Erfinder: Venter, Gideon, 14165 Berlin (DE)
(74) Vertreter: Wablat, Wolfgang

(57) **Zusammenfassung**

Bei einem Gasturbinentriebwerk, insbesondere Flugtriebwerk, mit einer Fan, mit einem Fangehäuse und mit einem Fanströmungskanal, sowie mit im Gehäuse des Triebwerkes in Strömungsrichtung hintereinander angeordneten Hochdruck- und Niederdruck-Turbinen, sollen die angeschlossenen Nebenaggregate mit nur geringer Erhöhung der Leistung des Triebwerkes angetrieben werden können. Hierzu ist in Strömungsrichtung der aus der Hochdruck-Turbine (15) austretenden Luftströmung (20) eine Einrichtung (17) zur Ableitung mindestens eines Teils der aus der Hochdruck-Turbine (15) austretenden Luftströmung (20) vor der Niederdruck-Turbine (16) in radialer Richtung in den Fanströmungskanal (4) vorgesehen.

## Beschreibung

Die Erfindung bezieht sich auf ein Gasturbinentriebwerk, insbesondere Flugtriebwerk, mit einem Fan, mit einem Fangehäuse und mit einem Fanströmungskanal, sowie mit in Strömungsrichtung im Gehäuse des Triebwerkes hintereinander angeordneten Hochdruck- und Niederdruck-Turbinen.

Ein Gasturbinentriebwerk, insbesondere Flugtriebwerk, der eingangs genannten Art ist aus der DE102005006415 A1 vorbekannt. Bei diesem Triebwerk wird die Antriebsleistung zum Betrieb der angeschlossenen Nebenaggregate einer Welle des Triebwerks entnommen. Dies kann die Niederdruckwelle, aber auch die Hochdruckwelle sein, so dass die Antriebsleitung für die Nebenaggregate vom Hochdruck-System des Triebwerkes erzeugt wird. Beim Anlassen des Triebwerkes wird die Richtung der Antriebsleistung umgekehrt und das Hochdruck-System wird auf die erforderliche Startgeschwindigkeit beschleunigt.

Zur Erzeugung größerer elektrischer Leistungen bzw. Energien muss der Leistungsabzug vom Hochdruck-System erheblich gesteigert werden. Der erhöhte Leistungsabzug beeinflusst die Funktionsfähigkeit des Triebwerkes am Boden und im Sinkflug bei Leerlaufbedingungen. Dieser zusätzliche Leistungsabzug vermindert die Schubleistung des Hochdruck-Systems und erfordert, dass die Arbeitslinie des Triebwerkes erhöht wird. Dies wird durch eine Erhöhung der Geschwindigkeit des Triebwerkes erreicht. Die Erhöhung der Geschwindigkeit des Triebwerkes erhöht auch die Geschwindigkeit des Niederdruck-Systems mit dem Ergebnis einer kombinierten Erhöhung der Schubkraft.

Die erhöhte Schubkraft bei Leerlaufbedingungen am Boden und im Sinkflug hat die Nachteile, dass die minimalen Erfordernisse bei der Geschwindigkeit am Boden und beim Bremsen erhöht werden müssen, und ferner, dass die Dauer des Sinkfluges des Flugzeuges mit höherem Treibstoffverbrauch und verlängerter Sinkflugphase ausgedehnt wird.

Der Erfindung liegt die Aufgabe zugrunde, ein Gasturbinentriebwerk der gattungsgemäßen Art so auszubilden, dass die angeschlossenen Nebenaggregate mit geringerer Erhöhung der Leistung des Triebwerkes angetrieben werden können.

Zur Lösung dieser Aufgabe sieht die Erfindung vor, dass in Strömungsrichtung der aus der Hochdruck-Turbine austretenden Luftströmung und hinter der Hochdruck-Turbine eine Einrichtung zur Ableitung mindestens eines Teils der aus der Hochdruck-Turbine ausströmenden Luftströmung vor der Niederdruck-Turbine in radialer Richtung in den Fanströmungskanal vorgesehen ist.

Der Grundgedanke der Erfindung besteht in der Einführung eines Systems, mit dem die Abluftströmung zwischen dem Hochdruck- und dem Niederdruck-Kompressor während der entsprechenden Leerlaufbedingungen in den Fanströmungskanal bzw. den Fan-Luftstrom abgeleitet wird.

Gemäß einem weiteren wesentlichen Merkmal der Erfindung ist die Einrichtung zur Ableitung der Luftströmung zwischen der Hochdruck- und der Niederdruck-Turbine aus im Gehäuse des Triebwerkes ausgebildeten, mit Klappen verschließbaren und in den Fanströmungskanal führenden Luftöffnungen gebildet, um mindestens einen Teil der Hochdruck-Turbine austretenden Luftströmung radial abzuleiten und in den Fanströmungskanal einzuleiten. Die KlappenVentile werden geöffnet, wenn sowohl die Geschwindigkeit als auch das minimale Schubkraftniveau erreicht sind.

Gemäß der Erfindung werden somit zwischen der Hochdruck-Turbine und der Niederdruck-Turbine Klappenventile in das Triebwerksgehäuse eingebaut, um mindestens einen Teil der Luftströmung abzuleiten bzw. der Luft abzulassen und um damit zu vermeiden, dass die gesamte Luft noch über die Niederdruck-Turbine strömt und in dieser Leistung erzeugt. Wenn die Niederdruck-Turbine weniger Luft erhält und damit weniger bzw. keine Leistung erzeugt, wird auch die Drehgeschwindigkeit des Fans geringer oder dieser sogar nicht betrieben. Ein Nebeneffekt ist eine Abbremsung der durch den Fanströmungskanal strömenden Luft.

Die Erfindung bedeutet die Einführung eines Systems, bei dem das Ablassen mindestens eines Teils der Zwischenstufen-Turbinenluft das Luftvolumen vermindert, das durch die Niederdruck-Turbine expandiert wird, und vermeidet eine Erhöhung der Geschwindigkeit und der Schubkraft der Niederdruck-Turbine, wenn das Hochdruck-System beschleunigt wird, um die mechanischen Leistungsanforderungen zu erfüllen.

Das Ablassen mindestens eines Teils der Luft aus der Hochdruck-Turbine in den Fanströmungskanal bewirkt außerdem eine Blockierung der durch den Fanströmungskanal strömenden Luft und vermindert damit den durch den Fanströmungskanal strömenden Luftstrom. Es ist erforderlich, eine minimale Geschwindigkeit des Fans aufrechtzuerhalten, um einen angemessenen Luftstrom im Fanströmungskanal zu erreichen, um diesen mit dem heißen Luftstrom im Zwischen-Turbinen-Ablass zu mischen und um eine Überhitzung der Bauteile im Fanströmungskanal zu vermeiden.

Der erhöhte Druckabfall an der Hochdruck-Turbine kann auch in einer Erhöhung der Triebwerks-Leistung resultieren, vermindert die erforderliche Geschwindigkeit, die das Hochdruck-System benötigt, um betrieben zu werden, wenn die erhöhte mechanische Leistung abgefordert wird, was folglich den Treibstoffverbrauch reduziert.

Mit diesem System, das eine zunehmende Verminderung der hinter der Hochdruck-Turbine abgelassenen Luft ermöglicht, kann die Geschwindigkeit des Triebwerkes unverändert gehalten werden, während die Flugzeuggeschwindigkeit während der Fahrt am Boden und das Sinkverhältnis beim Landeanflug verändert werden, um den Anforderungen durch eine Variation des Volumens der abgelassenen Luft nachzukommen.

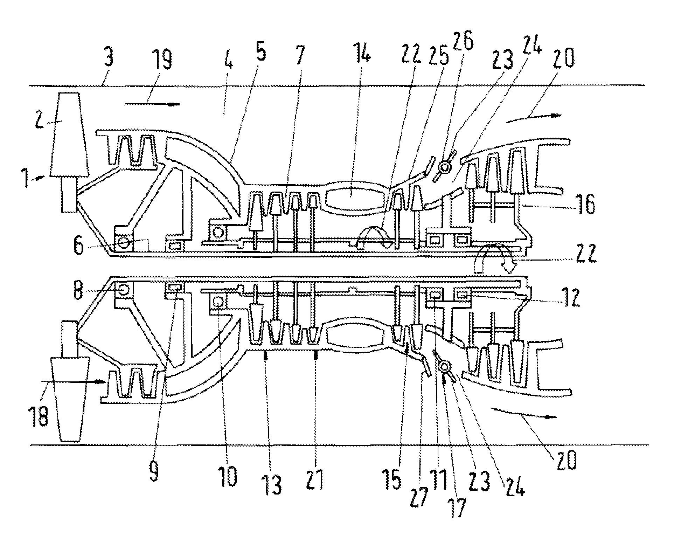

Ein Ausführungsbeispiel des Gasturbinentriebwerkes, insbesondere Flugtriebwerk, gemäß der Erfindung wird anhand der einzigen Figur näher erläutert. Diese zeigt einen schematischen Längsschnitt durch das Gasturbinentriebwerk.

Das dargestellte Gasturbinentriebwerk umfasst einen Fan 1 mit Fanschaufeln 2 zur Erzeugung eines Kernluftstromes 18 für das Kerntriebwerk 21 und ein Fangehäuse 3 mit angeschlossenem Fanströmungskanal 4, der das Gehäuse 5 des Kerntriebwerkes 21 ummantelt und in dem ein ebenfalls von den Fanschaufeln 2 erzeugter Fanströmungs-Luftstrom 19 fließt. Damit werden ein Teil 18 der angesaugten Luft vom Fan 4 durch das Kerntriebwerk 21 und ein anderer Teil 19 durch den Fanströmungskanal 4 geleitet. Im Gehäuse 5 des Kerntriebwerkes 21 sind eine Niederdruckwelle 6 und eine diese umgebende Hochdruckwelle 7 in mehreren Lagern 8, 9, 10, 11 und 12 gelagert. In Strömungsrichtung folgen dem Fan 1 ein Hochdruck-Kompressor 13, eine Brennkammer 14, eine Hochdruck-Turbine 15 und eine Niederdruck-Turbine 16. Der Fan 1 und die Niederdruck-Turbine 16 sind auf der zentralen Niederdruckwelle 6 gelagert. Die Hochdruckwelle 7 verläuft co-axial zur Niederdruckwelle 6 und umschließt diese. Die beiden Wellen 6 bzw. 7 laufen gleichsinnig, wie es die Drehrichtungspfeile 22 zeigen.

In Strömungsrichtung ist hinter der Hochdruck-Turbine 15 und vor der Niederdruck-Turbine 16 und zwischen diesen beiden Turbinen 15, 16 bzw. zwischen dem dritten Lager 11 und dem vierten Lager 12 im Gehäuse 5 des Triebwerkes 21 eine Einrichtung 17 zur Ableitung mindestens eines Teils der aus der Hochdruck-Turbine 15 austretenden Luftströmung 20 vor der Niederdruck-Turbine 16 angeordnet. Die Einrichtung 17 ist aus im Gehäuse 5 des Triebwerkes ausgebildeten, verschließbaren Klappen bzw. Ventilklappen 23 gebildet, die in, in den Fanströmungskanal 4 führenden, im Gehäuse 1 angeordneten Luftöffnungen 24 gebildet sind, um mindestens einen Teil der aus der Hochdruck-Turbine 15 austretenden Luftströmung radial nach außen abzuleiten und in den Fanströmungskanal 4 umzuleiten.

Wie es die einzige Figur prinzipiell zeigt, sind die Luftöffnungen 24 unmittelbar in der äußeren Wandung 25 des Gehäuses 1 ausgebildet. Die Ventilklappen 23 sind um Achsen 26 schwenkbar, die in der Wandung 25 gelagert sind. Die Ventilklappen 23 sind aus der in der Figur gezeigten halb geöffneten Stellung in eine mit der Wandung 25 bündige und die Luftöffnungen 24 dichtend abschließende, nicht gezeigte Schließstellung schwenkbar. Vorgelagerte Leitbleche 27 verhindern ein unmittelbares Eindringen der Fanströmungs-Luftströmung 19 in die Luftöffnungen 24.

In einer nicht dargestellten alternativen Ausführungsform können die Klappen 23 auch bei geöffneten Luftöffnungen 24 unmittelbar in die Luftströmung 20 zwischen Hochdruck- und Niederdruck-Turbine 15 bzw. 16 bewegbar ausgebildet sein.

### Bezugszeichenliste

- 1: Fan
- 2: Fanschaufel
- 3: Fangehäuse
- 4: Fanströmungskanal
- 5: Triebwerks-Gehäuse
- 6: Niederdruckwelle
- 7: Hochdruckwelle
- 8- 12: Lager
- 13: Hochdruck-Kompressor
- 14: Brennkammer
- 15: Hochdruck-Turbine
- 16: Niederdruck-Turbine
- 17: Einrichtung zur Ableitung
- 18: Kernluftstrom
- 19: Fanströmungs-Luftstrom
- 20: Luftströmung
- 21: Kerntriebwerk
- 22: Drehrichtungspfeil
- 23: Ventilklappe
- 24: Luftöffnung
- 25: Wandung
- 26: Achse
- 27: Leitblech

## Patentansprüche

1. Gasturbinentriebwerk, insbesondere Flugtriebwerk, mit einer Fan, mit einem Fangehäuse und mit einem Fanströmungskanal, sowie mit im Gehäuse des Triebwerkes in Strömungsrichtung hintereinander angeordneten Hochdruck- und Niederdruck-Turbinen,
**dadurch gekennzeichnet,**
**dass** in Strömungsrichtung der aus der Hochdruck-Turbine (15) austretenden Luftströmung (20) eine Einrichtung (17) zur Ableitung mindestens eines Teils der aus der Hochdruck-Turbine (15) austretenden Luftströmung (20) vor der Niederdruck-Turbine (16) in radialer Richtung in den Fanströmungskanal (4) vorgesehen ist.

2. Gasturbinentriebwerk nach Anspruch 1, **dadurch gekennzeichnet, dass** die Einrichtung (17) zur Ableitung der Luftströmung (20) zwischen der Hochdruck-Turbine (15) und der Niederdruck-Turbine (16) aus mit Klappen (23) verschließbaren, in den Fanströmungskanal (4) führenden Luftöffnungen (24) gebildet ist, um die aus der Hochdruck-Turbine (15) austretende Luftströmung (20) radial nach außen abzuleiten und in den Fanströmungskanal (4) einzuleiten.

3. Gasturbinentriebwerk nach Anspruch 2, **dadurch gekennzeichnet, dass** die Klappen (23) bei geöffneten Luftöffnungen (24) unmittelbar in die Luftströmung (20) zwischen Hochdruck- und Niederdruck-Turbine (15, 16) bewegbar sind.

4. Gasturbinentriebwerk nach Anspruch 2, **dadurch gekennzeichnet, dass** die Luftöffnungen (24) unmittelbar in der äußeren Wandung (25) des Gehäuses (1) ausgebildet sind.

5. Gasturbinentriebwerk nach Anspruch 4, **dadurch gekennzeichnet, dass** die Klappen bzw. Ventilklappen (23) um Achsen (26) schwenkbar sind, die in der Wandung (25) gelagert sind.

6. Gasturbinentriebwerk nach Anspruch 5, **dadurch gekennzeichnet, dass** die Ventilklappen (23) aus ihrer Offenstellung in eine mit der Wandung (25) bündige und die Luftöffnungen (24) im Gehäuse (1) dichtend abschließende Schließstellung schwenkbar sind.

7. Gasturbinentriebwerk nach einem der Ansprüche 2 bis 6, **dadurch gekennzeichnet, dass** den Luftöffnungen (24) in Strömungsrichtung der Fanströmungs-Luftströmung (19) im Fanströmungskanal (4) vorgelagerte, auf der Wandung (25) des Gehäuses (1) angeordnete Leitbleche (27) zur Abschirmung der Luftöffnungen (24) zugeordnet sind.
